# EUROPEAN PATENT SPECIFICATION

(11) **EP 0 407 199 B1**
(45) Date of publication and mention of the grant of the patent: **06.03.1996**
(21) Application number: 90307372.4
(22) Date of filing: 05.07.1990
(51) Int. Cl.: H04N 3/09, G02B 26/10

(54) **Image forming apparatus**
Bilderzeugende Vorrichtung
Appareil de formation d'images

(30) Priority: 07.07.1989 GB 8915612
(43) Date of publication of application: 09.01.1991
(73) Proprietor: PILKINGTON THORN OPTRONICS LIMITED, Glasgow GS1 4BZ (GB)
(72) Inventor: Barron, Donald Robert, Sunbury-on-Thames, Middlesex (GB)
(74) Representative: MacDougall, Donald Carmichael

(56) References cited:
- DE-A- 2 219 954
- FR-A- 2 427 018
- US-A- 3 287 559
- US-A- 4 029 389
- US-A- 4 202 597
- US-A- 4 340 888

## Description

The present invention relates to image forming apparatus and, in particular, but not exclusively to image forming apparatus for forming a visible image representing the differential thermal radiance of a scene.

Many forms of apparatus for forming an image representing the differential thermal radiance of a scene are known, and are frequently referred to as thermal imagers. In view of the technical difficulties of fabricating a large matrix of infra-red (IR) sensitive detectors, it is usual to scan the scene to be viewed in both line and frame directions with an array of detectors, a number of detectors being used so as to increase sensitivity. Furthermore, to enhance sensitivity a relatively large scanning aperture is used, which may typically be 10 millimetres, with scanning occurring, typically, through 45° in one scan direction and 30° in the other.

There is also a need to find a convenient means to construct a viewable image formed by the detector. Electronic scan converters in combination with conventional cathode ray tubes have been proposed for this purpose but the systems are rather complex and have a relatively high power consumption.

Direct view image reproduction systems have, therefore, been proposed, which have improved reliability and lower power consumption. In direct view imagers a scanning array of light emitting diodes (LEDs) is usually employed, the scene being reconstructed by scanning the array of LEDs across the viewing aperture in a like manner to the scanning IR detectors used to image the scene. It is highly desirable to incorporate such IR scanners into telescopes so as to provide long range images of acceptable quality. The scanners should, however, be introduced into the telescope using the minimum of additional optical components so as to minimise both propagation losses and the weight of the device.

Scanning assemblies for IR detectors for incorporation into telescopes are known, GB Patent GB-A-1587098 discloses such a system in which a polygonal reflector is rotated at high speed so as to line scan an array of IR detectors. The IR radiation is reflected from reflective faces of the rotating polygonal reflector onto a reflector of a frame scanner. The frame scanner consists of a pair of reflectors disposed diametrically about the rotating reflector which are oscillated at a frame scan frequency, typically 50 Hz, in a direction perpendicular to the line scan direction. However, in such arrangements the rocking motion of the framing mirrors cause wander of the image pupil formed on the reflective faces of the rotating line scanner.

US-A-4202597 discloses a system with features comparable to those in the preamble to claim 1. US-A-4029389 discloses a radiation scanning system of this general type.

The present invention seeks to alleviate the problems associated with such direct view thermal imagers by the provision of an assembly having high quality, compared to existing devices, object and pupil imagery, compact size and low weight coupled with minimal distortion in both the infra-red and visible channels.

Accordingly, there is provided an optical scanner assembly comprising first scanning means including first and further reflectors for scanning a scene respectively about first and second axes, second scanning means including first and further reflectors for scanning emitted radiation about first and second axes for providing a visible representation of the scene, the first scanning means including an intermediate optical assembly for defining an image pupil on the further reflector thereof, and the second scanning means including an intermediate optical assembly for defining a path for the emitted radiation between the first and further reflectors of the second scanning means, characterised in that the intermediate optical assemblies of the first and the second scanning means are arranged substantially concentric with respect to the image pupil defined on the further reflector of the first scanning means.

The intermediate optical assemblies of the first and second scanning means may comprise a concave and convex reflectors and a concentric lens.

The first reflector of the first scanning means and the further reflector of the second scanning means may comprise reflective surfaces of a prism.

The further reflector of the first scanning means and the first reflector of the second scanning means may comprise the opposite sides of a substantially planar support.

The concentric lenses of the first and second scanning means may comprise on one surface thereof a strip reflector.

The use of a strip reflector and a germanium lens in the intermediate optical assembly to give extra folding is found advantageous.

Alternatively, the scanner assembly may include an infra red telescope eyepiece.

The scanner assembly may also comprise a visible lightperiscope eyepiece.

The present invention may also comprise a thermal imaging device comprising a scanner as described above and including an array of infra red detectors for scanning the scene by way of the first scanning means and an array of light emitting diodes for providing the emitted radiation scanned by the second scanning means.

The present invention will now be described, by way of example only, with respect to the accompanying drawings in which like features are represented by like numerals and:
Figure 1 is a schematic plan view of a scanner assembly according to the invention;
Figure 2 is a schematic side view of a thermal imager incoporating the assembly illustrated in figure 1; and
Figures 3, 4 and 5 are plan views of alternative scanner assemblies according to the invention.

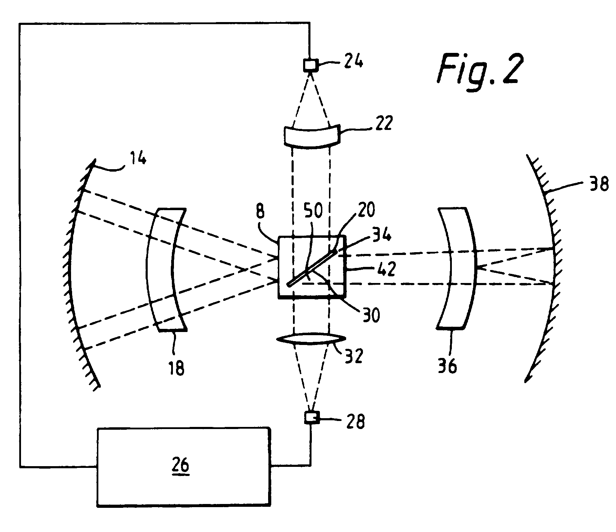

Referring to the drawings, an optical scanner 2 comprises first and second scanner assemblies 4, 6. The first scanning assembly 4 includes a first reflector 8, for receiving infra-red radiation 10 from a scene via a telescope objective 12. The first reflector 8 reflects the impinging radiation 10 via an intermediate optical assembly consisting of a concave reflector 14, strip reflector 16, and concentric germanium lens 18, to a further reflector 20, where it is directed via a lens assembly 22 to an array of infra-red detectors 24, as shown in Figure 2. The signals produced by the detectors 24 are supplied via respective signal processing channels 26 to light emissive diodes (LEDs) 28.

The second scanner assembly 6 comprises a first reflector 30 for receiving the visible radiation emitted by the LEDs 28 via a lens assembly 32, the reflector 30 of the second scanner 6 and the reflector 20 of the first scanner 4 being formed on opposite sides of a planar sheet or support 34. The scanner assembly 6 also includes an intermediate optical assembly consisting of a concentric glass lens 36 and concave reflector 38, the glass lens 36 having a strip reflector 40 disposed on the surface thereof facing the reflector 38 in a like manner to the germanium lens 18. A further reflector 42 is provided for directing the visible radiation from the LEDs 28 to an eyepiece 44 of a visible light periscope.

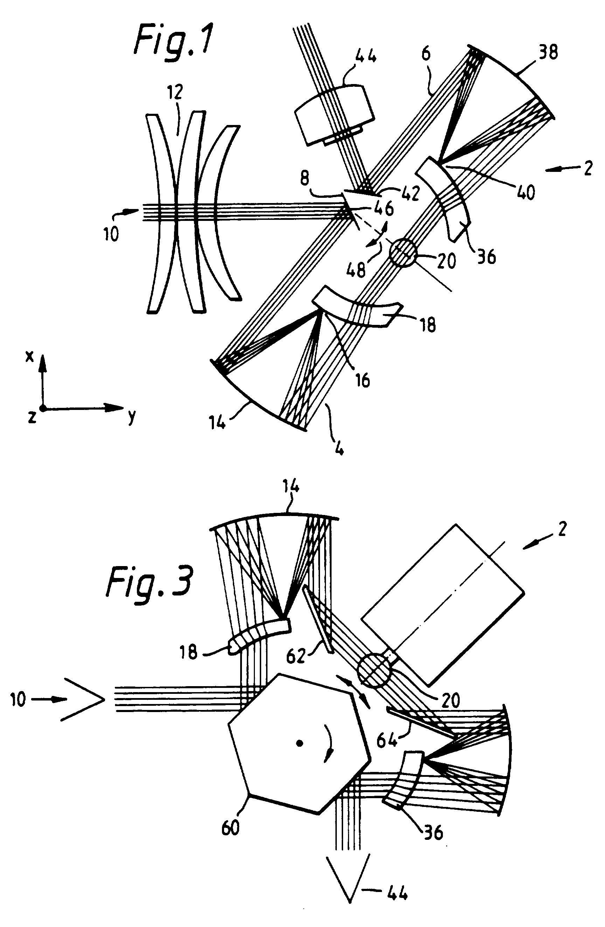

The reflectors 8 and 42 are, preferably, reflective faces of a prism (not shown) which is caused to oscillate at approximately 250Hz, by any suitable drive means, about an axis 46, hereinafter referred to as the line scan axis, as shown by the arrow 48 in Figure 1. The support 34, carrying the reflectors 20, 30 is mounted for oscillation about an axis 50, as shown in Figure 2, hereinafter referred to as the frame scan axis.

In operation, the thermal or infra red radiance 10 from a scene to be viewed passes through the telescope eyepiece 12 onto the reflector 8. The detector 8, oscillating about the line scan axis 46 causes the IR radiation to scan in the xy plane shown in Figure 1 so as to scan across the surface of concave reflector 14. The IR radiation is reflected onto the strip mirror 16 formed on the surface of the germanium lens 18, back to the reflector 14 and then through lens 18 to form an image pupil on the reflector 20, which is oscillating at a frequency of about 50Hz about the frame scan axis 50 so as to cause the beam to scan in the yz plane shown in Figure 1. In this manner, the array of IR detectors 24 is caused to line and frame scan the scene being viewed. The signals produced by IR detectors 24 are passed by the signal processing channels 26 to the array of LEDs 28. The visible radiation emitted by LEDs 28 is reflected by reflector 30, through the glass lens 36 onto reflector 38. As the reflector 30 is oscillating about the frame scan axis the visible radiation is caused to scan across the reflector 38. The visible radiation is then reflected by strip reflector 40 and again by concave reflector 38 to impinge on reflector 42.

Reflector 42, which is fixed relative to the reflector 8, is also oscillating about the line scan axis 46 and hence, the visible radiation emitted by the LEDs 28 is caused to scan in line and frame to provide a viewable image of the scene in the eyepiece 44 of the visible light periscope.

It will be realised from the foregoing description that all optical surfaces of the reflectors 14, 38 and the lenses 18 and 36 are arranged concentrically with respect to the image pupil formed on the reflector 20. The radii of curvature and the thicknesses of the germanium lens and glass lens are selected to minimise the image and pupil aberrations of the spherical mirrors 14 and 16. With such an optical arrangement, a very compact scanner assembly may be realised and, furthermore, the concentricity of the optical components ensures that any reflections from the principal ray of an imaging beam are normal to the optical surface through which they are passing or from which they are being reflected. Hence, any reflections from the principal ray, such as those generated at the surfaces of the lenses 18 and 36, are reflected back down the principal ray, thereby avoiding the "Narcissus Effect". The term "Narcissus effect" will be assumed to be readily understood by persons skilled in this art and hence, will not be discribed in the present application.

With the scanner assembly 2 of the present invention pupils of 10 millimetres diameter can be scanned over angles of 90° by 60°, compared to scanning angle limits of approximately 60° by 45° with known scanners. Furthermore, as the line and frame scan axes can be accurately maintained, pupil wander, a problem in the known scanners incorporating a rotating polygon, is virtually eliminated. This high quality pupil imagery provides an optical scanner with minimal distortion in both the visible and infra red channels which is compact size, and of relatively low weight. Additionally, radiation propogation losses are low.

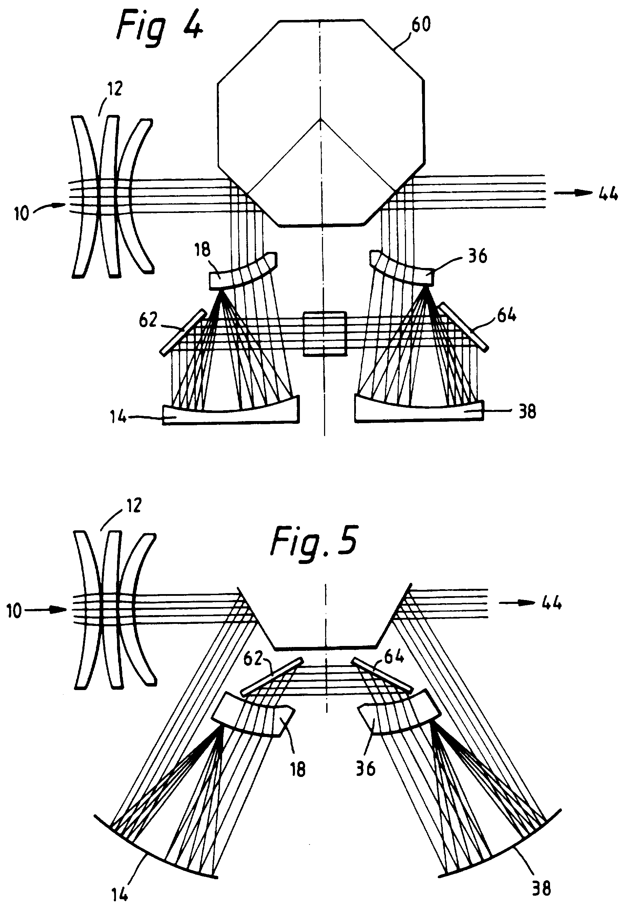

Although the present invention has been described with respect to a particular embodiment, it should be realised that modifications can be effected whilst remaining within the scope of the invention. For example, the reflectors 8 and 42 can be formed other than on the surfaces of a prism and reflectors 20 and 30 need not necessarily be formed on the opposite sides of a common support member 34. Such an example is shown in figure 3, where the wedge mirror pair 8 and 42 have been replaced by a polygon mirror 60, to permit very high speed scanning.

In addition fold mirrors 62 and 64 have been incorporated to reflect the radiation as desired for effective operation.

Figures 4 and 5 show further alternative configurations of scanner assemblies embodying the main features of the present invention.

## Claims

1. An optical scanner assembly comprising first scanning means (4) including a first and a further reflector for scanning a scene respectively about first and second axes, second scanning means (6) including a first and a further reflector for scanning emitted radiation about first and second axes for providing a visible representation of the scene, the first scanning means (4) including an intermediate optical assembly (14) for defining an image pupil on the further reflector (20) thereof, and the second scanning means including an intermediate optical assembly for defining a path for the emitted radiation between the first (30) and further (42) reflectors of the second scanning means, characterised in that the intermediate optical assemblies of the first and second scanning means are arranged substantially concentric with respect to the image pupil defined on the further reflector of the first scanning means.

2. An optical scanner assembly according to claim 1 wherein the intermediate optical assemblies of the first and second scanning means comprise concave and convex reflectors and a concentric lens.

3. An optical scanner assembly according to claims 1 or 2 wherein the first reflector of the first scanning means and the further reflector of the second scanning means comprise reflective surfaces of a prism.

4. An optical scanner assembly according to claims 1 to 3 wherein the further reflector of the first scanning means and the first reflector of the second scanning means may comprise the opposite sides of a substantially planar support (34).

5. An optical scanner assembly according to claims 1 to 4 wherein the concentric lenses of the first and second scanning means comprise on one surface thereof a strip reflector (16,40).

6. An optical scanner assembly according to any of claims 1 to 5 wherein the scanner assembly includes an infra red telescope objective.

7. An optical scanner assembly according to any of claims 1 to 5 wherein the scanner assembly comprises a visible light periscope eyepiece.

8. A thermal imaging device including an optical scanner assembly as described by any of the above claims.

9. A thermal imaging device according to claim 8 wherein the thermal imaging device includes an array of infra red detectors (24) for scanning the scene by way of the first scanning means.

10. A thermal imaging device according to claim 8 wherein the thermal imaging device includes an array of light emitting diodes (28) for providing the emitted radiation scanned by the second scanning means.

## Patentansprüche

1. Optische Abtastanordnung mit ersten Abtastmitteln (4) mit einem ersten und einem weiteren Reflektor zum jeweiligen Abtasten einer Ansicht um eine erste und eine zweite Achse, zweiten Abtastmitteln (6) mit einem ersten und einem weiteren Reflektor zum Abtasten von emittierter Strahlung um eine erste und eine zweite Achse zur Bereitstellung einer sichtbaren Darstellung der Ansicht, wobei die ersten Abtastmittel (4) eine optische Zwischenanordnung (14) zum Definieren eines Zwischenbildes auf dem weiteren Reflektor (20) davon aufweisen, und die zweiten Abtastmittel eine optische Zwischenanordnung zum Definieren eines Pfades für die emittierte Strahlung zwischen dem ersten (30) und dem weiteren (42) Reflektor der zweiten Abtastmittel aufweisen, dadurch gekennzeichnet, daß die optischen Zwischenanordnungen der ersten und der zweiten Abtastmittel im wesentlichen konzentrisch bezüglich des auf dem weiteren Reflektor der ersten Abtastmittel ausgebildeten Zwischenbildes angeordnet sind.

2. Optische Abtastanordnung gemäß Anspruch 1, bei der die optischen Zwischenanordnungen der ersten sowie der zweiten Abtastmittel konkave und konvexe Reflektoren und eine konzentrische Linse aufweisen.

3. Optische Abtastanordnung gemäß Anspruch 1 oder 2, bei der der erste Reflektor der ersten Abtastmittel und der weitere Reflektor der zweiten Abtastmittel Reflexionsflächen eines Prismas aufweisen.

4. Optische Abtastanordnung gemäß Ansprüchen 1 bis 3, bei der der weitere Reflektor der ersten Abtastmittel und der erste Reflektor der zweiten Abtastmittel die entgegengesetzten Seiten eines im wesentlichen planaren Trägers (34) aufweisen können.

5. Optische Abtastanordnung gemäß Ansprüchen 1 bis 4, bei der die konzentrischen Linsen der ersten und der zweiten Abtastmittel an einer Oberfläche davon einen Streifenreflektor (16, 40) aufweisen.

6. Optische Abtastanordnung gemäß einem der Ansprüche 1 bis 5, bei der die Abtastanordnung ein Infrarotteleskopobjektiv aufweist.

7. Optische Abtastanordnung gemäß einem der Ansprüche 1 bis 5, bei der die Abtastanordnung ein Periskopokular für sichtbares Licht aufweist.

8. Thermische Abbildungsvorrichtung mit einer optischen Abtastanordnung gemäß einem der vorhergehenden Ansprüche.

9. Thermische Abbildungsvorrichtung gemäß Anspruch 8, wobei die thermische Abbildungvorrichtung eine Anordnung von Infrarotdetektoren (24) zum Abtasten der Ansicht mittels der ersten Abtastmittel aufweist.

10. Thermische Abbildungsvorrichtung gemäß Anspruch 8, wobei die thermische Abbildungsvorrichtung eine Anordnung lichtemittierender Dioden (28) zur Bereitstellung der emittierten, von den zweiten Abtastmitteln abgetasteten Strahlung aufweist.

## Revendications

1. Dispositif de balayage optique comprenant des premiers moyens de balayage (4) comportant un premier réflecteur et un autre réflecteur pour balayer une scène respectivement autour d'un premier et d'un deuxième axes, des deuxièmes moyens de balayage (6) comportant un premier réflecteur et un autre réflecteur pour balayer un rayonnement émis autour d'un premier et d'un deuxième axes afin de fournir une représentation visible de la scène, les premiers moyens de balayage (4) incluant un dispositif optique intermédiaire (14) pour définir une pupille image sur leur autre réflecteur (20), et les deuxièmes moyens de balayage incluant un dispositif optique intermédiaire afin de définir un chemin pour le rayonnement émis entre le premier réflecteur (30) et l'autre réflecteur (42) des deuxièmes moyens de balayage, caractérisé en ce que les dispositifs optiques intermédiaires des premiers et deuxièmes moyens de balayage sont disposés sensiblement concentriquement par rapport à la pupille image définie sur l'autre réflecteur des premiers moyens de balayage.

2. Dispositif de balayage optique suivant la revendication 1, dans lequel les dispositifs optiques intermédiaires des premiers et deuxièmes moyens de balayage comprennent des réflecteurs concave et convexe et une lentille concentrique.

3. Dispositif de balayage optique suivant la revendication 1 ou 2, dans lequel le premier réflecteur des premiers moyens de balayage et l'autre réflecteur des deuxièmes moyens de balayage sont constitués par des surfaces réfléchissantes d'un prisme.

4. Dispositif de balayage optique suivant les revendications 1 à 3, dans lequel l'autre réflecteur des premiers moyens de balayage et le premier réflecteur des deuxièmes moyens de balayage peuvent être constitués par les faces opposées d'un support sensiblement plan (34).

5. Dispositif de balayage optique suivant les revendications 1 à 4, dans lequel les lentilles concentriques des premiers et deuxièmes moyens de balayage comprennent, sur une de leurs surfaces, un réflecteur à bande (16,40).

6. Dispositif de balayage optique suivant une quelconque des revendications 1 à 5, dans lequel le dispositif de balayage comprend un objectif de télescope à infrarouge.

7. Dispositif de balayage optique suivant une quelconque des revendications 1 à 5, dans lequel le dispositif de balayage comprend un viseur de périscope à lumière visible.

8. Dispositif de formation d'images thermiques comprenant un dispositif de balayage optique suivant une quelconque des revendications précédentes.

9. Dispositif de formation d'images thermiques suivant la revendication 8, dans lequel le dispositif de formation d'images thermiques comprend un ensemble de détecteurs d'infrarouge (24) pour balayer la scène à l'aide des premiers moyens de balayage.

10. Dispositif de formation d'images thermiques suivant la revendication 8, dans lequel le dispositif de formation d'images thermiques comprend un ensemble de diodes émettrices de lumière (28) pour fournir le rayonnement émis balayé par les deuxièmes moyens de balayage.
